# EUROPEAN PATENT SPECIFICATION

(11) **EP 0 684 924 B1**
(45) Date of publication and mention of the grant of the patent: **04.06.1997**
(21) Application number: 94905278.1
(22) Date of filing: 13.12.1993
(51) Int. Cl.: B65D 35/22, B65D 81/32, B65B 7/14, B65B 51/20

(54) **MULTI-TUBE PACKAGING CONTAINER AND METHOD FOR ITS PRODUCTION**
AUS MEHREREN TUBEN BESTEHENDER VERPACKUNGSBEHÄLTER UND VERFAHREN ZU DESSEN HERSTELLUNG
RECIPIENT DE CONDITIONNEMENT A PLUSIEURS TUBES ET SON PROCEDE DE FABRICATION

(30) Priority: 26.02.1993 SE 9300669
(43) Date of publication of application: 06.12.1995
(73) Proprietor: NORDEN PAC DEVELOPMENT AB, S-391 28 Kalmar (SE)
(72) Inventor: LINN R, Hans, S-392 36 Kalmar (SE)
(74) Representative: Harrison, Michael Charles
(86) International application number: SE9301064
(87) International publication number: WO9419251

(56) References cited:
- WO-A-90/06260
- DE-A- 3 616 207
- FR-A- 2 647 093
- US-A- 3 866 800
- US-A- 4 511 426
- US-A- 4 957 581
- US-A- 4 964 539
- US-A- 5 114 044

## Description

### Field of the Invention

The invention relates to a method of producing a packaging container as defined in the first part of claim 1 and also to a packaging container as defined in the first part of claim 9.

### Background to the invention

The features defined in the first part of claim 1 and the first part of claim 9 are known from US-A-3 866 800.

The type of container disclosed in US-A-3 866 800 relates not to a multi-tube container, but to a single piece blow-moulded container. It is also disclosed that the tube body may be formed by extrusion. In its extruded form, the container is divided into two compartments, or sections, by co-forming a common central wall between the two outer walls. In its blow-molded form, a combined breast portion unit, divided into two combined outlet sections is integrally-attached to the tube by being integrally formed therewith, so as to form a discharge portion. The discharge end is then sealed by horizontally-extending disc, with two ports, one for each of the chambers. A covering cap is then fitted to the outside. In its extruded form however, it is not disclosed how the breast portion could be fitted to the extruded tube body itself to form a discharge portion which is sealed to the tube body at all locations.

Whilst certain difficulties are obviously present with sealing the discharge ends of such containers acceptably, an even greater limitation is present regarding the shape and size of the open ends of the intermediate product, through which open ends contents is to be filled, since these ends are necessarily restricted in their cross section. This is due to the common central wall which brings the outside walls very close together due to the form obtained at the end of the extrusion or moulding process. This will clearly make filling of the tube compartments with contents both difficult and slow.

Subsequent sealing of the open ends, through which the contents may be added is a further difficulty, since obtaining an effective seal across the four facing walls merely by using heated jaws gives rise to great difficulty in practice.

Machine-produced multi-tube packages having separately-manufactured storage compartments are also known per se in the prior art, but have not found practical application due to the filling and sealing speeds required for economical packaging production. Such a packaging container is known for example from DE-A-3 616 207 which discloses one or more one-piece, blow-moulded tube portions which are held together by means of welding along the sides, or alternatively by strapping means so as to form a single packaging unit. However, such prior art containers cannot be economically produced since, due to the blow-molded tubes, filling has to occur via a very small open nozzle portion at the discharge end. Moreover, the welded packages are unsightly due to the ugly appearance of the welds along the sides.

Packaging containers of the single-tube type are commonly used on the market for containing a large variety of products although such tubes are most commonly associated with cosmetic products such as face creams or the like. The tubes themselves are generally of polyethylene (PE), polypropylene (PP), a laminate of either of these, or other similar materials and may be extruded in circular tubular form, cut to length and then attached to a breast portion. In subsequent steps a closure cap is applied to the discharge end of the breast, the tube is filled and then sealed by one seam weld between the two facing walls.

A need has developed in the packaging industry to have two or more products, normally different in some respect (e.g. chemical composition), stored separately within the same packaging container. Due to the aforementioned problems associated with filling and sealing of the aforementioned prior art containers, attempts at fulfilling this need having been largely restricted to using rigid or semi-rigid injection moulded containers having concentric product compartments inside a single outer casing and provided with a pump attachment, e.g. toothpaste dispensers. Such containers are however relatively expensive.

Since container packaging accounts for a major portion of the costs of the final marketed product, it is clear that cost savings in packaging must be achieved wherever possible.

As a cheap solution to the above problem, manufacturers who produce and fill the containers with product, e.g. face cream, have often accepted using two similar tubes, one for each respective product and selling these together in an additional package. However this involves unnecessary packaging materials being employed not only for the additional package which is required to store both tubes but also for the use of two cap members instead of only one.

The present invention aims at overcoming the above mentioned inconveniences by providing a method and a packaging container which is suitable for a plurality of products intended to be separate from each other until dispensed, and which meets the requirements of high speed machine production and filling which are encountered today.

### Summary of the Invention

In accordance with the invention, the packaging container and its method of manufacture are defined by the features of the independent product and method claims respectively, preferred features being defined in the dependent claims.

### Brief description of the drawings

The invention will now be described in more detail with reference to particular, non-limiting embodiments and with reference to the accompanying drawings in which:
- Fig.1: shows a cross-sectional view of an embodiment of the invention comprising two flexible tubes in the unfilled state,
- Fig.2: shows a cross-sectional plan view taken along line II-II of Fig.1,
- Fig.3: shows an enlarged view of the top portion of Fig.1 on a larger scale,
- Fig.4: shows the two tube package of Fig.1 seen from the side after filling and sealing,
- Fig.5: shows a side view of Fig.4,
- Fig.6: shows a plan view of Fig.4,
- Fig.7: shows a perspective view of an unfilled, two-tube packaging container with alternative breast portion design,
- Fig.8: shows a rear perspective view of the container of Fig.7,
- Figs.9 & 10: show frontal and rear perspective views of a filled and sealed three-tube/three breast container;
- Figs.11 to 15: show, in plan view, various illustrative embodiments of the invention relating to both two and three-tube versions with differing breast shapes, and
- Fig.16: demonstrates schematically the production method of the invention used for forming, filling and sealing containers in steps A to H.

### Description of preferred embodiments

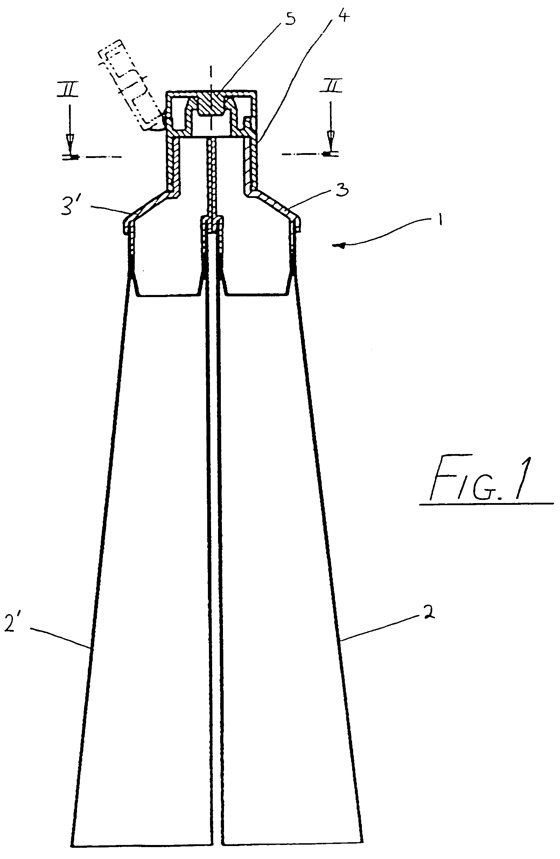

Figs. 1 to 3 depict an embodiment of an empty and non-sealed, packaging container 1, having two flexible tubes 2, 2' which are made from a constant circular cross-section, extruded plastics tube which has been cut to the required length. At the upper end of each flexible tube portion 2, 2' a respective breast portion 3, 3' has been attached. The attachment of the breast portion to the flexible tube is carried out by welding, such as by hot air welding or induction welding (if metal laminates are used) for example. The tube/breast combination is accessible around its whole periphery at this stage and thus standard welding techniques, allowing high volume throughput can be employed. It should also be remarked that each of the breast portions and tubes is substantially identical in this embodiment, which has the particular advantage that only one production line for the joining of the tubes to the breast portions is required. Clearly different sizes could be used though if desired.

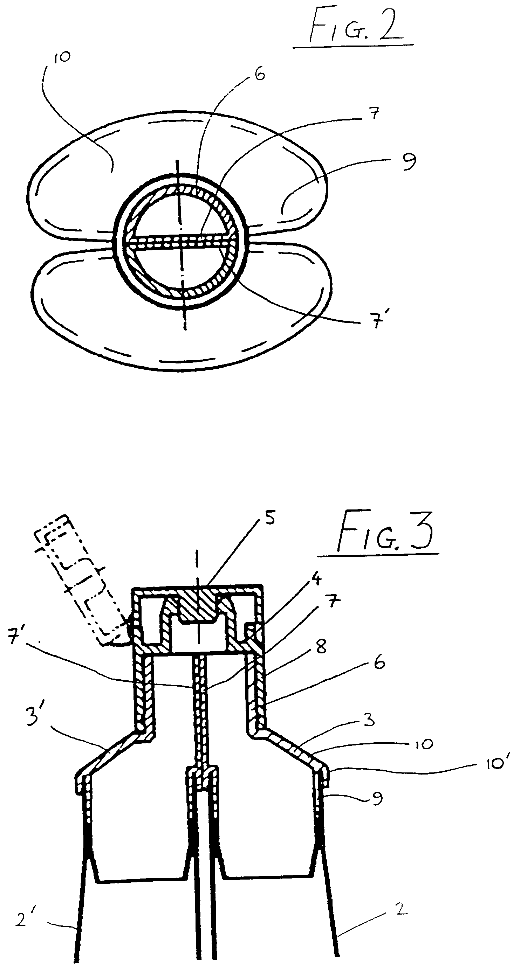

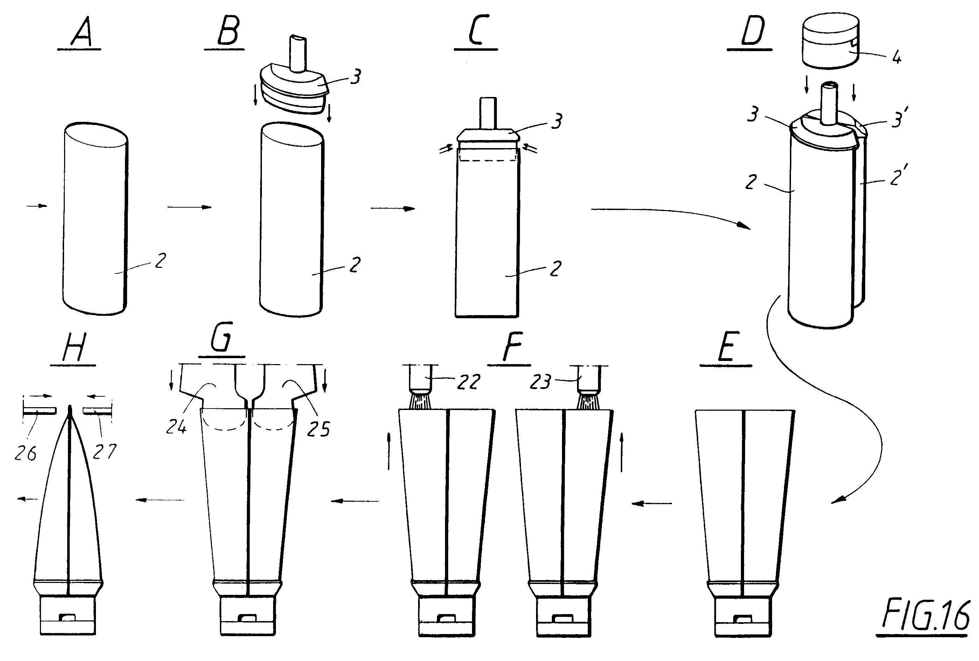

As can be seen from Fig.2, the discharge end 6 of the breast portion 3 is of smaller cross-sectional area than that of the attachment end 9 of the breast, the two being combined by a sloping shoulder surface 10. Thus, one end of the circular tube 2 must be manipulated by suitable means (not shown) to assume the shape of the attachment end of the breast portion, which is accomplished due to the flexibility of the tube. This will also be explained later with respect to Fig. 16.

Each of the breast portions 3, 3' is positioned adjacent the other and these are secured together inside a closure member 4 provided with a closure lid 5. The manner of securing the closure member 4 to the breast portions can be accomplished in various ways. A tight push fit between the skirt 8 of the closure member may suffice for most applications, although secure attachment can be enhanced or replaced by welding, gluing or even a snap fitting if this is desirable.

Moreover it is possible to attach the breast portions 3, 3' together without the use of a closure member such as that denoted by reference 4. This can thus be performed by using any suitable means such as welding, gluing or otherwise fixing the contacting surfaces 7, 7' of the breast portions 3, 3' together.

As is clear from Fig.2 the two breast portions 3 and 3' are in close contact with each other along their respective planar sides 7 and 7'. By the use of such planar sides, the alignment of the two breasts is achieved in an effective and secure manner. As an alternative, a complementary convex/concave or V-shaped (as seen from above) formation on each of the walls 7 and 7' might also be used to add positional exactness, whilst still maintaining surface contact therebetween.

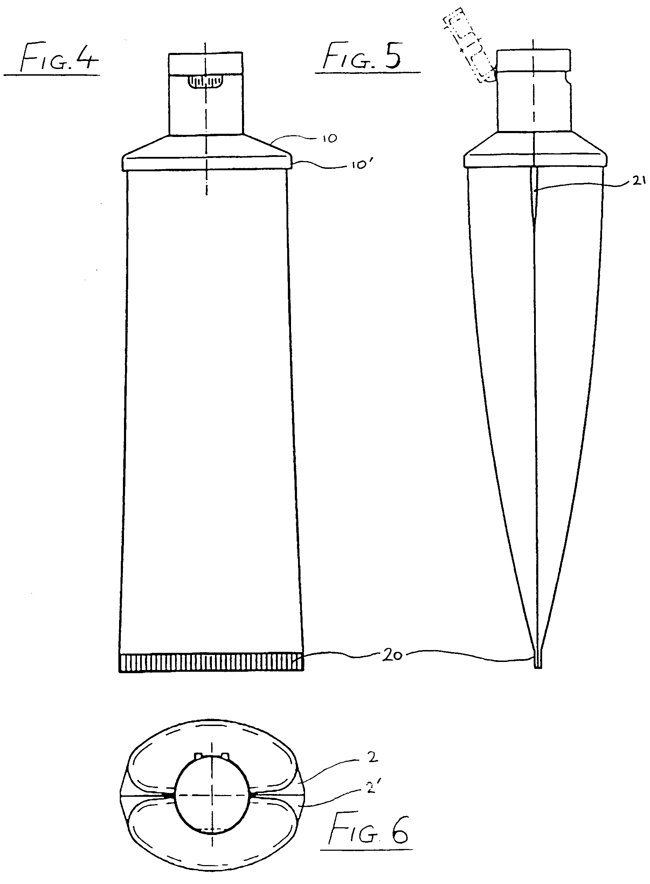

For purposes of illustration, the open position of the closure lid 5 has been depicted in dotted lines in Figs. 1 and 3 and it is to be understood that the actual type of closure member used is in no way limiting for the invention. For example, the closure member may consist of a divided lid section in which each part of the lid closes one of the breasts, allowing independent dispensing from each of the two tubes. This may be useful for example if the products harden when in contact with each other, such as with glue and hardener combinations.

Figs. 4 to 6 depict the packaging container of Figs. 1 to 3 in a filled and sealed state. A transverse seal 20 has been effected at the lower end of the flexible tubes thus sealing together four layers of material, as will be explained in more detail later with respect to Fig.16.

In the embodiment shown, a gap 21 is present between the inwardly facing tube outer walls. This gap occurs since the tubes are sealed at their upper ends to the lower ends 9 of the breast portions 3, 3' all around their perimeters, radially inwardly with respect to the downwardly extending skirt section 10' of the shoulder portion 10. If desired, this gap may be hidden by extending the downwardly extending skirt periphery 10', or in some cases by a modified design of the attachment between the part 9 of the breast portion and the tube to produce a flush fit.

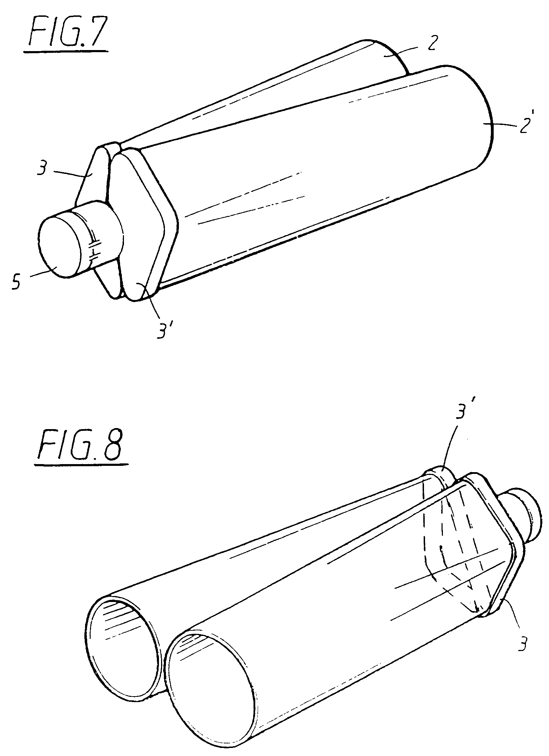

Figs. 7 and 8 show a two-tube embodiment where the breast portions are given a different shape which is also readily sealable to the extruded tube portions 2, 2'. The circular to non-circular variation over the length of the tube is shown very clearly for example in Fig.8. This aspect is of importance for assisting fast and effective filling and sealing of the tubes.

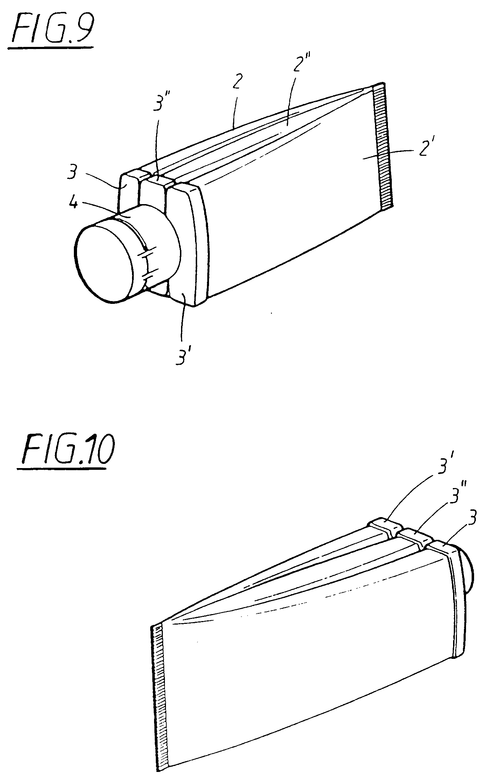

Figs. 9 and 10 show front and rear perspective views of a three-tube embodiment comprising three tubes 2, 2' and 2'' with three breast portions 3, 3' and 3'' each attached to a respective tube which are all united together, in a hidden manner, inside the closure member 4.

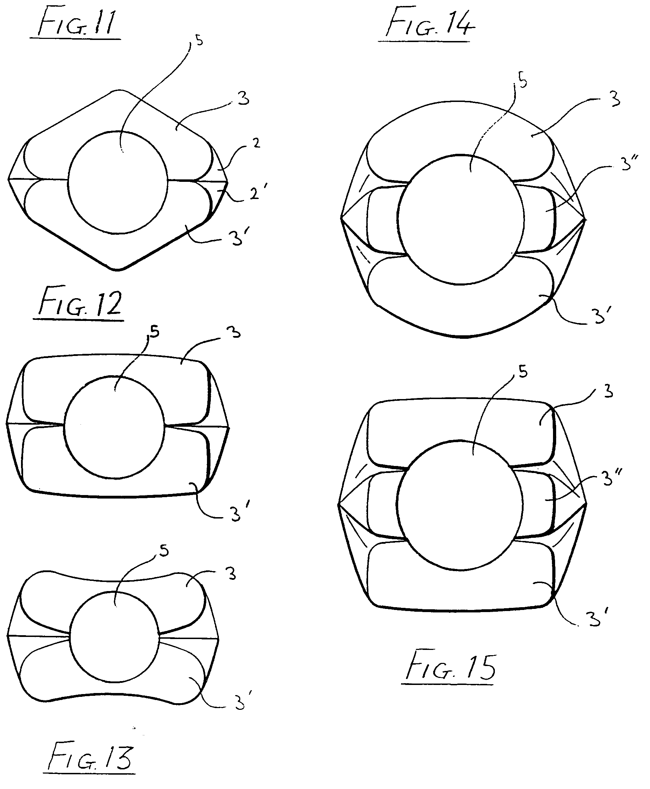

Figs. 11 to 15 show further embodiments of two and three-tube versions in plan view and with varying shapes of breast portion. Thus it can be seen that many different types of shape of breast portion are imaginable within the definition provided in the claims.

Fig. 16 demonstrates schematically the sequence of method steps adopted for forming, filling and sealing the multi-tube packaging containers. In step A an extruded and cut-to-length tube 2 having a constant cross-section is fed into a breast-attachment machine. A breast portion 3 is then partially inserted into the top end of the tube (step B) after first adapting the top of the tube (by appropriate means) to the shape of the adjoining breast portion. In step C the tube and inserted breast have been transferred to a welding station, in which hot air is directed onto the discharge end 9 and under the outer skirt 10' (see Fig.3) before the breast portion is moved downwardly into full engagement with the tube upper end (see e.g. Fig.3) to thus securely attach it thereto.

The pre-prepared single tube/breast combinations 2, 2' and 3, 3' are passed to a further machine in which the two tubes 2, 2' are temporarily held together with the faces 7 and 7' (see Fig.3) of their respective breast portions in contact, before having a cap 4 fitted (as shown in step D) in order to permanently unite the two separate tubes together via said breast portions 3, 3'. Welding of the cap 4 to the breasts 3, 3' may be carried out if desired.

Steps E to H occur in a filling machine. In step E the open-ended, twin-tube packaging container is fed into the machine with its cap 4 downwards. At station F, filling is effected. Filling may occur at high speed since the tube body presents a large open cross-sectional area, as opposed to the opposite end which has been conformed to the shape of the breast portion. This large cross-sectional area is thus allowed due to the nature of the tube being a simple extruded tube length for each of the tubes and by the separate conforming of the tube end before subsequent attachment of a breast portion thereto. By staggering the filler heads 22 and 23 as shown, parallel filling may also be achieved.

During step G, at the next station, a hot air nozzle 24, 25 is introduced into each of the open ends of the tubes 2, 2' and hot air is supplied in order to heat the tube ends around the inner periphery. In this way, a satisfactory solution to the sealing problem is achieved since the heat applied to the inside of the tubes is, to some degree, also conducted to the external surfaces and, in particular, to the surfaces at the interface of the open ends of the two tubes. Due to the close proximity of the tubes, sufficient heat is developed and maintained at this interface location such that, in step H, a clamping of the tube ends together by the jaw members 26, 27 will produce not only sealing of the individual tubes per se but also a sealing of the individual tubes to each other, thus a sealing between respective layers of four juxtaposed layers. In this manner, an efficient yet reliable manner for sealing the tubes closed and to each other is achieved whilst still allowing a high-speed filling process to take place.

The packaging containers thus formed are then fed out of the machine for further processing (e.g. labelling).

As will be apparent from the foregoing, the seal between the individual tubes relies basically on conducted heat from inside the tube end. As a consequence of this, the seal strength at the location between the individual tubes will generally be weaker than the seal of the individual tubes per se.

In accordance herewith, it will be apparent that also packaging containers comprising more than two tubes may be sealed together without difficulty merely by using more hot air welding nozzles, one for each tube.

Whilst certain embodiments of the invention have been shown and described hereinabove, these are merely illustrative examples and should not be construed as limiting for the scope of the invention defined by the features in the following claims. In particular, the number and dimensions of the flexible tube and breast portions can be varied according to requirements. For instance, a four-tube version is readily imaginable and still relatively simple to manufacture using a corresponding number of breast portions appropriately designed for fitting together. Five or more tubes is equally possible. The only requirement is that each of the breast portions to which each of the tubes is attached should be appropriately shaped to have a surface to surface area contact between the respective contacting parts.

## Claims

1. A method of machine-producing a filled packaging container comprising a plurality of joined sections of flexible tube (2, 2') made of extruded plastics, with a discharge portion (3, 3*'*) at one end of said sections of flexible tube (2, 2'), **characterized in that** each of said flexible tube sections (2, 2*'*) is a separate extruded tube, and in that said discharge portion comprises a separate hollow breast portion (3, 3*'*) for each tube section (2, 2*'*), said method comprising the steps of attaching one end of each of said flexible tubes (2, 2') to a respective one of said hollow breast portions (3, 3') by welding, placing said plurality of tubes with attached breast portions adjacent each other and securing said breast portions (3, 3') together, whereafter said tubes are filled via the open ends of the tubes positioned opposite to the ends with the hollow breast portions, and wherein the open ends of said tubes are each heated individually prior to the plurality of tube ends being clamped together and sealed together.

2. Method according to claim 1, characterized in that the step (G) of heating said open tube ends comprises lowering a hot air nozzle (22, 23) into each one of said plurality of tubes ends, supplying hot air and then removing said nozzles (22, 23).

3. Method according to claim 1 or claim 2, characterized in that each of said breast portions (3, 3') is attached to its respective tube end (2, 2') by hot air welding.

4. Method according to any preceding claim, characterized in that each of said extruded tubes (2, 2') comprises a plastics material that is readily deformable to assume a corresponding shape to that of the part (9) of the breast portion (3, 3') to which it is to be attached.

5. Method according to any preceding claim, characterized in that each of said breast portions (3, 3') has an attachment end (9) for attachment to the tube and a discharge end (6) for discharging contents, said discharge ends being secured together by means of a cap member (4) placed over said plurality of contacting discharge ends, said cap member (4) being fixedly secured to said breast portions (3, 3').

6. Method according to any preceding claim, characterized in that three or more flexible tubes (2, 2', 2'') are provided, each having a hollow breast portion (3, 3', 3'') attached thereto and welded together at their opposite ends.

7. Method according to any preceding claim, characterized in that each of the flexible tubes is extruded from plastics material, such as PE, PP or laminates of these.

8. Method according to any of claims 5 to 7, characterized in that each of said discharge ends (6) of said breast portions (3, 3') presents a planar surface (7), against which a corresponding planar surface (7') of an adjacent breast (3) is secured.

9. A machine-produced packaging container (1), wherein said packaging container (1) comprises a plurality of flexible tube sections (2, 2') formed from extruded plastics, with a hollow discharge portion at one end of said flexible tube sections (2, 2*'*), characterized in that each of said respective flexible tube sections (2, 2*'*) is a separate extruded flexible tube, said discharge portion is formed by a separate respective hollow breast portion (3, 3*'*) attached to a respective tube section (2, 2*'*), in that said separate hollow breast portions (3, 3') are secured together, and in that each of said respective hollow breast portions (3, 3') is permanently attached to its respective extruded tube (2, 2') by welding.

10. A packaging container according to claim 9, characterized in that said packaging container is filled with contents and in that the combined tube packaging container is sealed at the end opposite the breast portions (3, 3'), such that the seal at this location between the individual tube lengths is weaker than the seal of the individual tube lengths.

## Patentansprüche

1. Verfahren zur maschinellen Herstellung eines gefüllten Verpackungsbehälters, der mehrere verbundene Abschnitte von aus extrudiertem Kunststoff hergestelltem flexiblem Rohr (2, 2') mit einem Ausgabeabschnitt (3, 3') an einem Ende der flexiblen Rohrabschnitte(2, 2') umfaßt, dadurch gekennzeichnet, daß jeder der flexiblen Rohrabschnitte (2, 2') ein separat extrudiertes Rohr ist und daß der Ausgabeabschnitt einen separaten hohlen Brustabschnitt (3, 3') für jeden Rohrabschnitt (2, 2') aufweist, welches Verfahren die Schritte des Anbringens eines Endes jedes der flexiblen Rohre (2, 2') an einem entsprechenden hohlen Brustabschnitt (3, 3') durch Verschweißen, des Plazierens der Vielzahl von Rohren mit angebrachten Brustabschnitten unmittelbar aneinander und des Befestigens der Brustabschnitte (3, 3') aneinander umfaßt, woraufhin die Rohre über die offenen Enden der Rohre, die den Enden mit den hohlen Brustabschnitten gegenüberliegend angeordnet sind, befüllt werden, wobei die offenen Enden der Rohre jeweils einzeln erwärmt werden, bevor die Vielzahl der Rohrenden zusammengeklemmt und miteinander versiegelt werden.

2. Verfahren nach Anspruch 1, dadurch gekennzeichnet, daß der Schritt (G) des Erwärmens der offenen Rohrenden das Absenken einer Heißluftdüse (22, 23) in jedes der Vielzahl von Rohrenden, das Zuführen von Heißluft und anschließend das Entfernen der Düsen (22, 23) umfaßt.

3. Verfahren nach Anspruch 1 oder 2, dadurch gekennzeichnet, daß jeder der Brustabschnitte (3, 3') an seinem jeweiligen Rohrende (2, 2') durch Heißluftschweißung angebracht wird.

4. Verfahren nach einem der vorstehenden Ansprüche, dadurch gekennzeichnet, daß jedes der extrudierten Rohre (2, 2') ein Kunststoffmaterial umfaßt, das ohne weiteres verformbar ist, so daß es eine der Form des Teils (9) des Brustabschnitts (3, 3'), an dem es anzubringen ist, entsprechende Form annimmt.

5. Verfahren nach einem der vorstehenden Ansprüche, dadurch gekennzeichnet, daß jeder der Brustabschnitte (3, 3') ein Befestigungsende (9) zum Anbringen des Rohres und ein Ausgabeende (6) zum Ausgeben des Inhalts hat, welche Ausgabeenden mittels eines Kappenelements (4) aneinander befestigt werden, das über die Vielzahl einander berührender Ausgabeenden gesetzt wird, welches Kappenelement (4) fest an den Brustabschnitten (3, 3') befestigt ist.

6. Verfahren nach einem der vorstehenden Ansprüche, dadurch gekennzeichnet, daß drei oder mehr flexible Rohre (2, 2', 2'') vorgesehen sind, an welchen jeweils ein hohler Brustabschnitt (3, 3', 3'') angebracht ist und die an ihren gegenüberliegenden Enden miteinander verschweißt sind.

7. Verfahren nach einem der vorstehenden Ansprüche, dadurch gekennzeichnet, daß jedes der flexiblen Rohre aus Kunststoffmaterial, wie etwa PE, PP oder Laminaten aus diesen, extrudiert ist.

8. Verfahren nach einem der Ansprüche 5 bis 7, dadurch gekennzeichnet, daß jedes der Ausgabeenden (6) der Brustabschnitte (3, 3') eine planare Oberfläche (7) hat, an der eine entsprechende planare Oberfläche (7') einer benachbarten Brust (3) befestigt wird.

9. Maschinell hergestellter Verpackungsbehälter (1), bei welchem der Verpackungsbehälter (1) eine Vielzahl von flexiblen Rohrabschnitten (2, 2') aufweist, die aus extrudiertem Kunststoff gebildet sind, mit einem hohlen Ausgabeabschnitt an einem Ende der flexiblen Rohrabschnitte (2, 2'), dadurch gekennzeichnet, daß jeder der jeweiligen flexiblen Rohrabschnitte (2, 2') ein separates extrudiertes flexibles Rohr ist, der Ausgabeabschnitt durch jeweils einen separaten hohlen Brustabschnitt (3, 3') gebildet ist, der an einem jeweiligen Rohrabschnitt (2, 2') angebracht ist, dadurch, daß die separaten hohlen Brustabschnitte (3, 3') aneinander befestigt sind und dadurch, daß jeder der jeweiligen hohlen Brustabschnitte (3, 3') durch Verschweißen dauerhaft an seinem jeweiligen extrudierten Rohr (2, 2') angebracht ist.

10. Verpackungsbehälter nach Anspruch 9, dadurch gekennzeichnet, daß der Verpackungsbehälter mit Inhalt gefüllt ist und daß der kombinierte Rohrverpackungsbehälter an dem den Brustabschnitten (3, 3') gegenüberliegenden Ende versiegelt ist, so daß die Versiegelung an dieser Stelle zwischen den einzelnen Rohrstücken schwächer ist als die Versiegelung der einzelnen Rohrstücke.

## Revendications

1. Procédé de production automatique d'un récipient de conditionnement rempli qui comprend une pluralité de tronçons de tube souple réunis (2, 2'), faits d'une matière plastique extrudée, avec une partie de vidage (3, 3') en une extrémité desdits tronçons de tube souple (2, 2'), caractérisé en ce que chacun desdits tronçons de tube souple (2, 2') est un tube extrudé distinct et en ce que ladite partie de vidage comprend une partie creuse distincte formant versoir (3, 3') pour chaque tronçon de tube (2, 2'), ledit procédé comprenant les étapes consistant à fixer par soudure une extrémité de chacun desdits tubes souples (2, 2') à l'une correspondantes des parties creuses formant versoirs (3, 3'), à placer ladite pluralité de tubes, auxquels sont fixées les parties formant versoirs, adjacents les uns aux autres et à fixer ensemble lesdites parties formant versoirs (3, 3'), après quoi lesdits tubes sont remplis par les extrémités ouvertes des tubes situées à l'opposé des extrémités comportant les parties creuses formant versoirs, et dans lequel les extrémités ouvertes desdits tubes sont toutes chauffées individuellement avant que les extrémités de la pluralité de tubes ne soient fixées ensemble et scellées les unes aux autres.

2. Procédé selon la revendication 1, caractérisé en ce que l'étape (G) de chauffage des extrémités ouvertes des tubes comprend le fait de faire descendre une buse à air chaud (22, 23) dans chacune desdites extrémités de la pluralité de tubes, le fait d'envoyer de l'air chaud et le fait de retirer ensuite lesdites buses (22, 23).

3. Procédé selon la revendication 1 ou la revendication 2, caractérisé en ce que chacune desdites parties formant versoirs (3, 3') est fixée à l'extrémité de son tube respectif (2, 2') par soudure à l'air chaud.

4. Procédé selon l'une quelconque des précédentes revendications, caractérisé en ce que chacun desdits tubes extrudés (2, 2') comprend une matière plastique qui peut être facilement déformée pour prendre une forme qui correspond à celle de la partie (9) du versoir (3, 3') à laquelle il doit être fixe.

5. Procédé selon l'une quelconque des précédentes revendications, caractérisé en ce que chacune desdites parties formant versoirs (3, 3') comporte une extrémité de fixation (9) destinée à être fixée au tube et une extrémité de vidage (6) destinée à la sortie du contenu du tube, lesdites extrémités de vidage étant fixées ensemble à l'aide d'un élément formant bouchon (4) placé au-dessus de ladite pluralité d'extrémités de vidage se touchant, ledit élément formant bouchon (4) étant fixement assujetti auxdites parties formant versoirs (3, 3').

6. Procédé selon l'une quelconque des précédentes revendications, caractérisé en ce qu'il y a trois tubes souples (2, 2', 2'') ou plus, comportant chacun une partie creuse formant versoir (3, 3', 3'') qui leur est fixée, et soudés ensemble en leur extrémité opposée.

7. Procédé selon l'une quelconque des précédentes revendications, caractérisé en ce que chacun desdits tubes souples est extrudé à partir d'une matière plastique comme du PE, du PP ou des stratifiés de ceux-ci.

8. Procédé selon l'une quelconque des revendications 5 à 7, caractérisé en ce que chacune des extrémités de vidage (6) desdites parties formant versoirs (3, 3') présente une surface plane (7) contre laquelle est fixée une surface plane correspondante (7') d'un versoir (3) adjacent.

9. Récipient de conditionnement (1) produit en machine, dans lequel ledit récipient de conditionnement (1) comprend une pluralité de tronçons de tube souple (2, 2') faits d'une matière plastique extrudée, avec une partie creuse de vidage en une extrémité desdits tronçons de tube souple (2, 2'), caractérisé en ce que chacun desdits tronçons de tube souple (2, 2') est un tube souple extrudé distinct, en ce que ladite partie de vidage est formée par une partie creuse distincte formant versoir (3, 3') fixée à un tronçon de tube respectif (2, 2'), en ce que lesdites parties creuses distinctes formant versoirs (3, 3') sont assujetties ensemble et en ce que chacune desdites parties creuses formant versoirs (3, 3') est fixée de manière permanente par soudure à son tube extrudé correspondant (2, 2').

10. Récipient de conditionnement selon la revendication 9, caractérisé en ce que ledit récipient de conditionnement est rempli de son contenu et en ce que le récipient de conditionnement à tubes combinés est scellé en l'extrémité opposée aux parties formant versoirs (3, 3'), de sorte que le joint situé en cet emplacement entre les tronçons de tube individuels est moins résistant que le joint des tronçons de tube individuels.
